# FASCICULE DE BREVET EUROPEEN

(11) **EP 2 857 324 B1**
(45) Date de publication et mention de la délivrance du brevet: **18.05.2016**
(21) Numéro de dépôt: 14183610.6
(22) Date de dépôt: 04.09.2014
(51) Int. Cl.: B65D 33/00

(54) **Enveloppe étanche à propulsion et résistance améliorées**
Dichte Hülle mit verbessertem Antrieb und verbessertem Widerstand
Sealed enclosure with improved propulsion and strength

(30) Priorité: 25.09.2013 FR 1359235
(43) Date de publication de la demande: 08.04.2015
(73) Titulaire: Decomatic S.A., 38290 La Verpillière (FR)
(72) Inventeur: Allegre, Jean-Luc, 38460 Trept (FR); Bugnet, Sylvie, 38138 Les Côtes d'Arey (FR)
(74) Mandataire: Thibault, Jean-Marc

(56) Documents cités:
- EP-A1- 1 475 310
- FR-A1- 2 701 693
- FR-A1- 2 839 959
- FR-A1- 2 876 084
- FR-A1- 2 878 510

## Description

La présente invention se rapporte au domaine technique général des emballages ou enveloppes souples destinés au transport d'articles au sens général. De telles enveloppes sont connues par exemple de FR 2701693, FR 2878510, FR 2876084 et FR 2839959.

Plus particulièrement, l'invention se rapporte au domaine des enveloppes ou emballages souples et étanches destinés au transport d'articles tels que par exemple des produits pharmaceutiques ou des échantillons biologiques à l'intérieur de réseaux pneumatiques.

De manière usuelle, de tels réseaux pneumatiques utilisent comme contenant des cartouches en matériau rigide. Cependant, ces cartouches ont un prix de revient important, elles sont encombrantes et elles ont tendance à s'accumuler à certains points du réseau si les flux physiques ne sont pas homogènes. Pour remédier à ces inconvénients, l'art antérieur a proposé diverses variantes de réalisation d'une enveloppe à usage unique et à bas prix de revient, adaptée pour transporter des articles sur des réseaux pneumatiques.

Par exemple, le brevet EP 0 664 264 a proposé un emballage souple de transport comprenant un sac réalisé en matière plastique soudée dont l'ouverture donnant accès au volume interne est obturable après remplissage, par un volet rabattable pré-encollé. L'une des faces du sac est pourvue d'une pièce fixée par au moins deux côtés aux bords correspondant du sac de manière à former une poche de propulsion de l'emballage par l'air comprimé du réseau pneumatique. La pièce formant la poche est réalisée en matière plastique souple et s'étend sur une partie de la longueur du sac à partir d'une de ses extrémités, de sorte que l'ouverture de la poche est parallèle au volet rabattable.

Lors du convoyage, le frottement continu du sac en plastique souple contre les parois du réseau pneumatique peut aboutir à une perte d'étanchéité, voire à une déchirure de l'enveloppe. Au vu des articles transportés - échantillons biologiques potentiellement contaminés et/ou à expertiser, produits chimiques, etc. - il est nécessaire de maintenir cette étanchéité tout au long du processus de convoyage pour éviter l'exposition du personnel à des agents biologiques potentiellement dangereux d'une part, et la contamination de l'ensemble du réseau d'autre part. En outre, il est nécessaire de préserver l'intégrité de l'article convoyé, par exemple pour ne pas fausser une analyse ultérieure.

Pour remédier à ce problème, la demande de brevet FR 2 878 510 a proposé de réaliser le sac d'un tel emballage par une double enveloppe, de sorte que le sac présente une double paroi, à savoir une paroi extérieure en contact avec le réseau de transport et une paroi intérieure, en contact avec les articles à transporter.

Si une telle solution permet d'améliorer la résistance à l'abrasion de telles enveloppes souples, il s'ensuit inévitablement une augmentation du prix de revient, en raison de l'utilisation d'un film de matière plastique de surface double.

L'objet de l'invention vise à remédier aux inconvénients de l'état de la technique en proposant une enveloppe étanche conçue pour pouvoir être déplacée de manière sûre à l'intérieur des réseaux de transport pneumatique et présentant un coût de revient limité tout en étant capable de résister à l'abrasion due aux frottements sur les parois du réseau pneumatique.

Pour atteindre un tel objectif, l'objet de l'invention concerne une enveloppe étanche destinée à transporter des articles à l'intérieur d'un réseau d'air comprimé selon au moins une direction déterminée de déplacement, comportant :
- Un sac réalisé en une matière plastique souple soudée délimitant un volume interne fermé accessible par au moins un passage d'accès obturable par un moyen de fermeture, ledit sac possédant une face recto et une face verso délimitées par deux bords longitudinaux opposés reliés entre eux par un premier bord transversal et un deuxième bord transversal,
- Au moins une poche de propulsion de l'enveloppe par l'air comprimé sur la face recto ou sur la face verso. Selon l'invention, l'enveloppe comporte au moins une poche de propulsion comportant un film rapporté de protection fixé à sa périphérie sur au moins une partie de la face recto ou verso de l'enveloppe, et un film rapporté de recouvrement au moins partiel du film de protection, fixé sur l'enveloppe à l'exception d'au moins une partie d'un bord transversal libre afin de délimiter entre le film de protection et le film de recouvrement, la poche de propulsion.

Un autre objet de l'invention est de proposer une enveloppe étanche comportant en combinaison l'une et/ou l'autre des caractéristiques suivantes :
- deux poches de propulsion rapportées respectivement sur la face recto et sur la face verso, chaque poche de propulsion comportant un film rapporté de protection fixé à sa périphérie sur au moins une partie de la face recto ou verso de l'enveloppe, et un film rapporté de recouvrement au moins partiel du film de protection, fixé sur l'enveloppe à l'exception d'au moins une partie d'un bord transversal libre afin de délimiter entre le film de protection et le film de recouvrement, la poche de propulsion,
- le film de protection et le film de recouvrement forment un film dossé,
- la face recto et la face verso sont reliées au moins au niveau d'un bord transversal, par un soufflet de fond,
- la face recto et la face verso sont reliées au niveau de chaque bord transversal, par un soufflet de fond,
- au moins une partie de la face recto et/ou verso située en dehors d'une poche de propulsion est munie d'un film rapporté de revêtement,
- le film rapporté de revêtement et/ou le film de protection et/ou le film de recouvrement présente une jupe de protection dépassant d'au moins un bord transversal du sac,
- deux poches de propulsion montées tête bêche sur au moins une face du sac.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective d'une première variante de réalisation d'une enveloppe étanche selon l'invention.
La **Figure 2** est une vue en coupe longitudinale de l'enveloppe illustrée à la **Fig. 1****.**
La **Figure 3** est une vue en coupe d'une autre variante de réalisation d'une enveloppe conforme à l'invention.

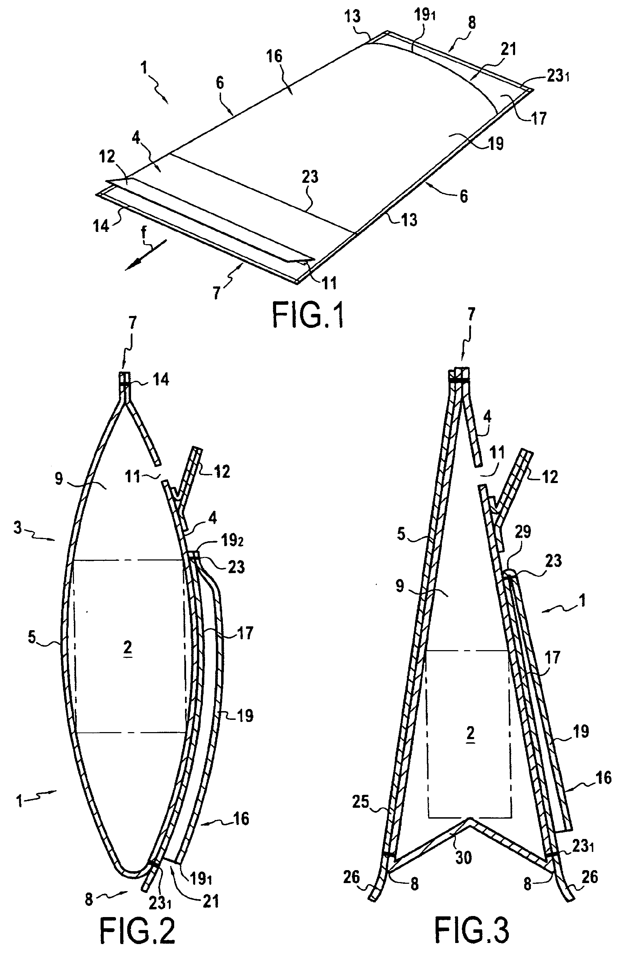

Les **Figures 1** et **2** représentent un exemple de réalisation d'un emballage ou d'une enveloppe étanche **1** selon l'invention. Cette enveloppe **1** est destinée à contenir des articles de toute nature tels que par exemple des produits pharmaceutiques ou des échantillons biologiques, représentés de façon schématique par la référence **2.** Un tel emballage est destiné à être introduit à l'intérieur d'un réseau pneumatique non représenté mais connu en soi pour permettre le transport des articles **2** d'un lieu à un autre. De manière usuelle, l'organe de transport du réseau pneumatique est généralement un tube.

L'enveloppe **1** se présente sous la forme d'un sac **3** réalisé à partir d'une matière plastique souple et de préférence recyclable, telle que le polyéthylène. Le sac **3** possède une face dite recto **4** et une face dite verso **5,** délimitées par deux bords longitudinaux opposés **6** reliés entre eux par un premier bord transversal **7** et un deuxième bord transversal **8** opposé au premier bord transversal **7.**

Dans l'exemple de réalisation ci-dessus, l'enveloppe **1** est représentée comme ayant une forme substantiellement rectangulaire, les bords longitudinaux **6** étant sensiblement parallèles entre eux et les bords transversaux **7** et **8** étant sensiblement parallèles entre eux. Bien entendu, l'enveloppe **1** peut présenter d'autres formes, par exemple une forme trapézoïdale ou une forme sensiblement rectangulaire avec au moins un angle arrondi. Les bords sont dits transversaux **7** et longitudinaux **6** en considération d'une part, de la forme allongée de l'enveloppe illustrée dans l'exemple de réalisation et d'autre part, du sens de circulation de l'enveloppe à l'intérieur du réseau pneumatique, représenté par la flèche **f** sur la figure **1****.** Les bords transversaux **7, 8** s'étendent ainsi transversalement par rapport au sens de circulation ou de déplacement de l'enveloppe.

Les faces **4, 5** de l'enveloppe sont réalisées par exemple à partir de deux feuilles plastiques souples superposées ou, comme dans l'exemple illustré, d'une feuille plastique souple repliée, dont au moins certains des bords sont soudés de manière à délimiter un volume fermé **9** accessible par un passage d'accès **11** obturable par un moyen de fermeture **12.** Par convention, la face du sac **3** dans laquelle est aménagée le passage d'accès **11** est la face recto **4.** Les bords longitudinaux **6** sont fermés au moyen de deux soudures longitudinales **13** tandis que le premier bord transversal **7,** est fermé au moyen d'une soudure transversale **14** alors que le deuxième bord transversal **8** se trouve fermé à la suite du pliage de la feuille. Bien entendu, dans le cas où le sac est réalisé à partir de deux feuilles superposées, alors les deux bords transversaux sont fermés par une soudure.

Bien entendu, le passage d'accès **11** est adapté pour permettre l'introduction de l'article **2** à l'intérieur du volume interne de l'emballage. Dans les exemples de réalisation qui suivent, le passage d'accès **11** est représenté parallèlement aux bords transversaux mais il est clair qu'un tel passage d'accès **11** peut être réalisé à n'importe quel endroit de l'emballage et être orienté différemment, comme par exemple parallèlement aux bords longitudinaux **6.**

Dans l'exemple illustré sur la **Figure 1****,** le passage d'accès **11** est réalisé en étant orienté parallèlement aux bords transversaux **7, 8.** Le passage d'accès **11** est obturé par un moyen de fermeture **12** de tous types connus en soi, assurant une fermeture étanche du volume interne **9** du sac **3.**

Conformément à l'invention, l'enveloppe étanche **1** comporte au moins une poche de propulsion **16** comportant, comme illustré à la **Figure 2****,** d'une part, un film rapporté de protection **17** fixé à sa périphérie sur au moins une partie de la face verso **5** ou comme dans l'exemple illustré, de la face recto **4** et d'autre part, un film rapporté de recouvrement **19,** positionné pour recouvrir au moins partiellement le film de protection **17,** en étant fixé sur l'enveloppe à l'exception d'au moins une partie d'un bord transversal libre **19₁** dudit film. Le film de protection **17** et le film de recouvrement **19** délimitent ainsi entre eux une ouverture **21** s'ouvrant à l'intérieur d'un volume fermé délimité entre les films de protection **17** et de recouvrement **19.** Cette ouverture **21** est dirigée vers l'un ou l'autre des bords transversaux **7, 8** et s'étend transversalement par rapport au sens de déplacement pour constituer une poche de propulsion de l'emballage par l'air comprimé du réseau.

La poche de propulsion **16** est ainsi formée à partir de deux films **17, 19** en matière plastique souple, positionnés au moins en partie de manière superposée en étant rapportés sur le sac **3** en tous endroits appropriés afin d'augmenter par ailleurs la résistance mécanique du sac **3** à l'endroit de leur positionnement sur le sac **3.**

Dans l'exemple illustré sur les **Figures 1** et **2****,** le film de protection **17** présente une dimension pour s'établir au niveau des bords longitudinaux **6** du sac, de manière à être fixé sur l'enveloppe à l'aide des soudures longitudinales **13** fermant le sac **3.** Dans l'exemple illustré, le film de protection **17** possède une dimension pour s'étendre au delà du deuxième bord transversal **8** selon lequel il est fixé à l'aide d'une soudure transversale **23₁.** Le film de protection **17** s'étend jusqu'au voisinage de l'ouverture d'accès **11** à l'endroit duquel une soudure transversale **23** permet de fixer le film de protection sur la face recto **4.** Le film de recouvrement **19** présente une dimension pour s'établir au niveau des bords longitudinaux **6** de manière à être fixé sur l'enveloppe à l'aide des soudures longitudinales **13.** Le film de recouvrement **19** possède à l'opposé de son bord transversal libre **19₁,** un bord transversal fermé **19₂** qui est fixé sur l'emballage à l'aide par exemple de la soudure transversale **23** qui assure la fixation du film de protection **17.** Bien entendu, le bord transversal fermé **19₂** peut être fixé à l'aide d'une soudure différente de celle assurant la fixation du film de protection **17.**

Selon cet exemple, le film de recouvrement **19** est fixé selon ses deux bords longitudinaux et un bord transversal **19₂,** de manière à délimiter selon toute la longueur de son bord transversal libre **19₁,** une ouverture d'accès **21** à cette poche ainsi formée. Bien entendu, il est à noter qu'il peut être prévu de fermer partiellement par soudure, le bord transversal libre **19₁.**

Avantageusement, le bord transversal libre **19₁** s'étend à distance du deuxième bord transversal **8** de l'enveloppe, afin de faciliter la réalisation de la soudure transversale **23₁** pour le film de protection **17.**

Bien entendu, la fixation du film de protection **17** et/ou du film de recouvrement **19** sur le sac peut être réalisée à l'aide de soudures différentes de celles **13, 14** réalisant les bords du sac **3.** Dans le même sens, dans l'exemple décrit ci-dessus, le film de protection **17** est fixé sur toute sa périphérie sur le sac **3** mais il peut être envisagé que ce film de protection **17** se trouve fixé au sac sur une partie seulement de sa périphérie, selon trois bords par exemple. De même, les dimensions des films de protection **17** et de recouvrement **19** peuvent être plus ou moins grandes par rapport aux faces recto **4** et verso **5** et sont choisies avantageusement pour protéger le sac et augmenter la propulsion. Ainsi, selon un exemple de réalisation, le film de protection **17** peut présenter une surface plus importante que la surface du film de recouvrement **19,** de sorte que la partie du film de protection **17** non située en vis-à-vis du film de recouvrement permet de protéger le sac **3.**

Selon une autre variante de réalisation non représentée, l'enveloppe selon l'invention comporte deux poches de propulsion **16** telles que décrites ci-dessus, l'une étant réalisée sur la face recto **4** et l'autre sur la face verso **5.** Il est à noter qu'il peut être envisagé de réaliser sur l'une ou les deux faces du sac **3,** deux poches de propulsion **16** conformes à l'invention, montées de manière tête bêche pour assurer un déplacement selon les deux sens de déplacement. Selon cette variante de réalisation, le film de protection **17** pour les deux poches peut être différent ou commun aux deux poches. De même, le film de recouvrement **19** pour les deux poches peut être différent ou commun aux deux poches. De même, le film de protection **17** et le film de recouvrement **19** pour les deux poches peuvent être réalisés à partir d'un film unique dossé. Les deux poches peuvent comporter des ouvertures **21** différentes ou une ouverture commune réalisée à l'aide d'une fente aménagée dans un film de recouvrement commun.

Dans le cas où seule une face du sac est équipée d'une poche de propulsion **16** conforme à l'invention, il peut être prévu d'équiper la face opposée à l'aide d'un film rapporté de revêtement **25** en matière plastique souple. Comme illustré à la **Figure 3****,** la face recto **4** est pourvue d'une poche de propulsion **16,** alors qu'un film de revêtement **25** est fixé sur la face verso **5** par l'intermédiaire de soudures. Le film de revêtement **25** possède des dimensions pour recouvrir partiellement ou complètement la face du sac. Un film de revêtement **25** en une ou plusieurs parties peut recouvrir également la ou les parties des faces du sac **3** situées en dehors de la ou des poches de propulsion **16.**

Il est à noter que le film de revêtement **25** peut déborder en présentant une jupe de protection **26** dépassant du deuxième bord transversal **8** afin de le protéger. Dans le même sens, il est à noter que le film de protection **17** et/ou le film de recouvrement **19** formant la poche de propulsion **16** peut également déborder du sac en présentant une jupe de protection **26** dépassant du ou des bords transversaux **7, 8** afin de les protéger.

Dans l'exemple illustré à la **Figure 2****,** la poche de propulsion **16** est formée à l'aide de deux films distincts. Selon une variante avantageuse de réalisation illustrée à la **Figure 3****,** le film de protection **17** et le film de recouvrement **19** forment un film dossé. En d'autres termes, la poche de propulsion est réalisée à l'aide d'un film unique plié selon une ligne de pliage **29,** de sorte que s'étendent de part et d'autre de cette ligne de pliage **29,** le film de protection **17** et le film de recouvrement **19.** Le film est dossé de manière symétrique ou comme illustré à la **Figure 3****,** de manière dissymétrique.

Selon une autre variante avantageuse de réalisation illustrée à la **Figure 3****,** la face recto **4** et la face verso **5** sont reliées au niveau du deuxième bord transversal **8** par un soufflet de fond **30** pour augmenter le volume de l'enveloppe et/ou la propulsion. Ainsi, le soufflet de fond **30** délimite avec chaque face du sac, un deuxième bord transversal **8.**

Bien entendu, il peut être envisagé que la face recto **4** et la face verso **5** se trouvent reliées par un soufflet de fond **30** au niveau de chaque bord transversal **7, 8.** Selon cette variante de réalisation, le sac **3** comporte un soufflet de fond **30** à chacune de ses extrémités.

Il est clair qu'il peut être prévu d'équiper d'un ou deux soufflets de fond **30,** le sac **3** selon l'une ou l'autre des variantes de réalisation décrites ci-dessus.

L'invention n'est pas limitée aux exemples décrits et représentés car diverses modifications peuvent y être apportées sans sortir de son cadre.

## Revendications

1. - Enveloppe étanche **(1)** destinée à transporter des articles **(2)** à l'intérieur d'un réseau d'air comprimé selon au moins une direction déterminée de déplacement, comportant :
- Un sac **(3)** réalisé en une matière plastique souple soudée délimitant un volume interne fermé **(9)** accessible par au moins un passage d'accès (**11**) obturable par un moyen de fermeture **(12),** ledit sac **(3)** possédant une face recto **(4)** et une face verso **(5)** délimitées par deux bords longitudinaux opposés **(6)** reliés entre eux par un premier bord transversal **(7)** et un deuxième bord transversal **(8),**
- Au moins une poche de propulsion de l'enveloppe par l'air comprimé sur la face recto **(4)** ou sur la face verso **(5), caractérisée en ce qu'**au moins une poche de propulsion **(16)** comporte un film rapporté de protection **(17)** fixé à sa périphérie sur au moins une partie de la face recto **(4)** ou verso **(5)** de l'enveloppe, et un film rapporté de recouvrement **(19)** au moins partiel du film de protection, fixé sur l'enveloppe à l'exception d'au moins une partie d'un bord transversal libre **19₁**) afin de délimiter entre le film de protection **(17)** et le film de recouvrement **(19),** la poche de propulsion.

2. - Enveloppe étanche selon la revendication 1, **caractérisée en ce qu'**elle comporte deux poches de propulsion **(16)** rapportées respectivement sur la face recto et sur la face verso, chaque poche de propulsion comportant un film rapporté de protection **(17)** fixé à sa périphérie sur au moins une partie de la face recto **(4)** ou verso **(5)** de l'enveloppe, et un film rapporté de recouvrement **(19)** au moins partiel du film de protection, fixé sur l'enveloppe à l'exception d'au moins une partie d'un bord transversal libre afin de délimiter entre le film de protection et le film de recouvrement, la poche de propulsion.

3. - Enveloppe étanche selon la revendication 1 ou 2, **caractérisée en ce que** le film de protection **(17)** et le film de recouvrement **(19)** forment un film dossé.

4. - Enveloppe étanche selon l'une des revendications 1 à 3, **caractérisée en ce que** la face recto **(4)** et la face verso **(5)** sont reliées au moins au niveau d'un bord transversal **(7, 8),** par un soufflet de fond **(30).**

5. - Enveloppe étanche selon l'une des revendications 1 à 4, **caractérisée en ce que** la face recto **(4)** et la face verso **(5)** sont reliées au niveau de chaque bord transversal (**7, 8),** par un soufflet de fond **(30).**

6. - Enveloppe étanche selon la revendication 1, **caractérisée en ce qu'**au moins une partie de la face recto **(4)** et/ou verso **(5)** située en dehors d'une poche de propulsion **(16)** est munie d'un film rapporté de revêtement **(25).**

7. - Enveloppe étanche selon la revendication 6, **caractérisée en ce que** le film rapporté de revêtement **(25)** et/ou le film de protection **(17)** et/ou le film de recouvrement **(19)** présente une jupe de protection **(26)** dépassant d'au moins un bord transversal du sac.

8. - Enveloppe étanche selon l'une des revendications 1 à 7, **caractérisée en ce qu'**elle comporte deux poches de propulsion **(16)** montées tête bêche sur au moins une face du sac **(3).**

## Patentansprüche

1. Dichte Hülle (1), die dazu bestimmt ist, Artikel (2) innerhalb eines Druckluftnetzes in wenigstens einer bestimmten Bewegungsrichtung zu befördern, umfassend:
- einen Beutel (3) aus einem flexiblen, geschweißten Kunststoff, der einen geschlossenen Innenraum (9), welcher über wenigstens einen durch ein Verschlussmittel (12) verschließbaren Zugangsdurchgang (11) zugänglich ist, begrenzt, wobei der Beutel (3) eine Vorderseite (4) und eine Rückseite (5) besitzt, die durch zwei gegenüberliegende, über einen ersten Querrand (7) und einen zweiten Querrand (8) untereinander verbundene Längsränder (6) begrenzt sind,
- wenigstens eine Tasche zum Antreiben der Hülle mittels Druckluft an der Vorderseite (4) oder an der Rückseite (5),
**dadurch gekennzeichnet, dass** wenigstens eine Antriebstasche (16) einen aufgesetzten Schutzfilm (17), welcher an seinem Umfang an wenigstens einem Teil der Vorderseite (4) oder Rückseite (5) der Hülle befestigt ist, und einen aufgesetzten Film zum wenigstens teilweisen Abdecken (19) des Schutzfilms umfasst, welcher mit Ausnahme wenigstens eines Teils eines freien Querrandes (19₁) an der Hülle befestigt ist, um zwischen dem Schutzfilm (17) und dem Abdeckfilm (19) die Antriebstasche zu begrenzen.

2. Dichte Hülle nach Anspruch 1, **dadurch gekennzeichnet, dass** sie zwei Antriebstaschen (16) umfasst, die auf die Vorderseite bzw. auf die Rückseite aufgesetzt sind, wobei jede Antriebstasche einen aufgesetzten Schutzfilm (17), welcher an seinem Umfang an wenigstens einem Teil der Vorderseite (4) oder Rückseite (5) der Hülle befestigt ist, und einen aufgesetzten Film zum wenigstens teilweisen Abdecken (19) des Schutzfilms umfasst, welcher mit Ausnahme wenigstens eines Teils eines freien Querrandes an der Hülle befestigt ist, um zwischen dem Schutzfilm und dem Abdeckfilm die Antriebstasche zu begrenzen.

3. Dichte Hülle nach Anspruch 1 oder 2, **dadurch gekennzeichnet, dass** der Schutzfilm (17) und der Abdeckfilm (19) einen gedoppelten Film bilden.

4. Dichte Hülle nach einem der Ansprüche 1 bis 3, **dadurch gekennzeichnet, dass** die Vorderseite (4) und die Rückseite (5) wenigstens im Bereich eines Querrandes (7, 8) durch einen Bodenbalg (30) verbunden sind.

5. Dichte Hülle nach einem der Ansprüche 1 bis 4, **dadurch gekennzeichnet, dass** die Vorderseite (4) und die Rückseite (5) im Bereich eines jeden Querrandes (7, 8) durch einen Bodenbalg (30) verbunden sind.

6. Dichte Hülle nach Anspruch 1, **dadurch gekennzeichnet, dass** wenigstens ein Teil der Vorderseite (4) und/oder Rückseite (5), welcher außerhalb einer Antriebstasche (16) gelegen ist, mit einem aufgesetzten Beschichtungsfilm (25) versehen ist.

7. Dichte Hülle nach Anspruch 6, **dadurch gekennzeichnet, dass** der aufgesetzte Beschichtungsfilm (25) und/oder der Schutzfilm (17) und/oder der Abdeckfilm (19) eine Schutzschürze (26), die an wenigstens einem Querrand des Beutels herausragt, aufweist.

8. Dichte Hülle nach einem der Ansprüche 1 bis 7, **dadurch gekennzeichnet, dass** sie zwei entgegengesetzt angebrachte Antriebstaschen (16) an wenigstens einer Seite des Beutels (3) umfasst.

## Claims

1. A sealed envelope (1) intended to transport articles (2) inside a compressed air network along at least one displacement direction, including:
- a bag (3) made in a welded flexible plastic material delimiting a closed internal volume (9) accessible through at least one access passage (11) obturatable by a closing means (12), said bag (3) having a front face (4) and a reverse face (5) delimited by two opposite longitudinal edges (6) connected to each other through a first transverse edge (7) and a second transverse edge (8),
- at least one pocket for propelling the envelope with the compressed air on the front face (4) or on the reverse face (5), **characterized in that** at least one propulsion pocket (16) includes an added protective film (17) attached at its periphery on at least one portion of the front (4) or reverse (5) face of the envelope, and an added film (19) for at least partly covering the protective film, attached on the envelope except for at least one portion of a free transverse edge (19₁) in order to delimit between the protective film (17) and the covering film (19), the propulsion pocket.

2. The sealed envelope according to claim 1, **characterized in that** it includes two propulsion pockets (16) added on the front face and on the reverse face, respectively, each propulsion pocket including an added protective film (17) attached at its periphery on at least one portion of the front (4) or reverse (5) face of the envelope, and an added film (19) for at least partly covering the protective film, attached on the envelope except for at least one portion of a free transverse edge in order to delimit between the protective film and the covering film, the propulsion pocket.

3. The sealed envelope according to claim 1 or 2, **characterized in that** the protective film (17) and the covering film (19) form a doubled film.

4. The sealed envelope according to one of claims 1 to 3, **characterized in that** the front face (4) and the reverse face (5) are at least connected at a transverse edge (7, 8) through bottom bellows (30).

5. The sealed envelope according to one of claims 1 to 4, **characterized in that** the front face (4) and the reverse face (5) are connected at each transverse edge (7, 8) through bottom bellows (30).

6. The sealed envelope according to claim 1, **characterized in that** at least one portion of the front (4) and/or reverse (5) face located outside a propulsion pocket (16) is provided with an added coating film (25).

7. The sealed envelope according to claim 6, **characterized in that** the added coating film (25) and/or the protective film (17) and/or the covering film (19) has a protective skirt (26) jutting out from at least one transverse edge of the bag.

8. The sealed envelope according to one of claims 1 to 7, **characterized in that** it includes two propulsion pockets (16) mounted head-to-tail on at least one face of the bag (3).
